(19) **Europäisches Patentamt**
**European Patent Office**
**Office européen des brevets**

(11) **EP 0 624 247 B1**

(12) **EUROPEAN PATENT SPECIFICATION**

(45) Date of publication and mention
of the grant of the patent:
**06.05.1999  Bulletin 1999/18**

(51) Int Cl.⁶: **G01N 27/30**

(21) Application number: **93902491.5**

(22) Date of filing: **28.01.1993**

(86) International application number:
**PCT/IE93/00002**

(87) International publication number:
**WO 93/15393 (05.08.1993 Gazette 1993/19)**

(54) **REFERENCE ELECTRODES**

REFERENZELEKTRODEN

ELECTRODES DE REFERENCE

(84) Designated Contracting States:
**AT BE CH DE DK ES FR GB IE IT LI NL SE**

(30) Priority: **28.01.1992 IE 26292**

(43) Date of publication of application:
**17.11.1994  Bulletin 1994/46**

(73) Proprietor: **AMAGRUSS LIMITED**
**Castlebar County Mayo (IE)**

(72) Inventor: **RUSSELL, Timothy Howard**
**Westport, Mayo (IE)**

(74) Representative:
**Parkes, Andrew John Aykroyd et al**
**c/o Tomkins & Co.**
**5 Dartmouth Road**
**Dublin 6 (IE)**

(56) References cited:
**EP-A- 0 022 625       EP-A- 0 247 535**
**DE-A- 3 823 327**

## Description

BACKGROUND OF THE INVENTION

a) Field of the Invention

This invention relates to reference electrodes.

Conventional reference electrodes are generally one of two types - Ag/AgCl electrodes and calomel electrodes. Reference electrodes are used together with measuring electrodes in electrochemical systems to determine the concentration of ions in a sample i.e. the pH or pX where X represents an ion. The electrical potential of the reference electrode should remain as constant as possible throughout the measuring process while the potential of the measuring electrode, which can be ion selective, is proportional to the concentration of the ion being tested in the sample. The potential of the reference electrode is kept substantially constant due to the presence of a saturated electrolyte salt bridge within the cell. The potential difference between the reference electrode and the measuring electrode is indicative of the concentration of the ion and is displayed on a millivolt instrument such as a potentiometer.

The electrolyte generally leaks very slowly through an opening in the reference electrode, for example at a porous plug, to form a liquid junction between the salt bridge and the sample solution being tested.

The potential of the complete electrochemical cell made up of the measuring electrode and the reference electrode can be represented by the following equation

$$E_{Cell} = E_{meas} + E_{ref} + E_{j}$$

where $E_{meas}$ is the potential of the measuring electrode, $E_{ref}$ is the potential of the reference electrode and $E_{j}$ is a junction potential.

The junction potential arises from the different rates of mobility of anions and cations at the interface between two electrolytic solutions. Ideally, the junction potential of the reference electrode should have a negligible variation between solutions as otherwise the change in the junction potential will appear as an error in the overall potential calculated for the sample and hence the concentration determined.

In certain applications, a precipitate can form at the junction of the reference electrode and the sample solution where the electrolyte of the reference electrode flows into the sample. These precipitates can clog the opening and therefore interfere with the liquid junction potential and give rise to measuring errors.

b) Description of the Related Art

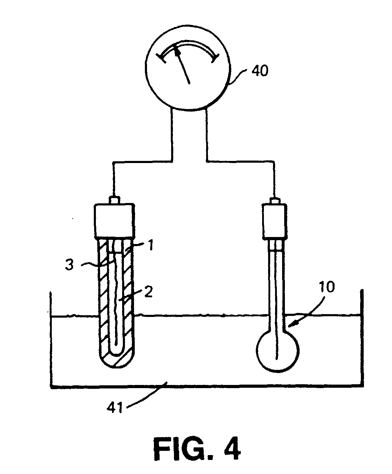

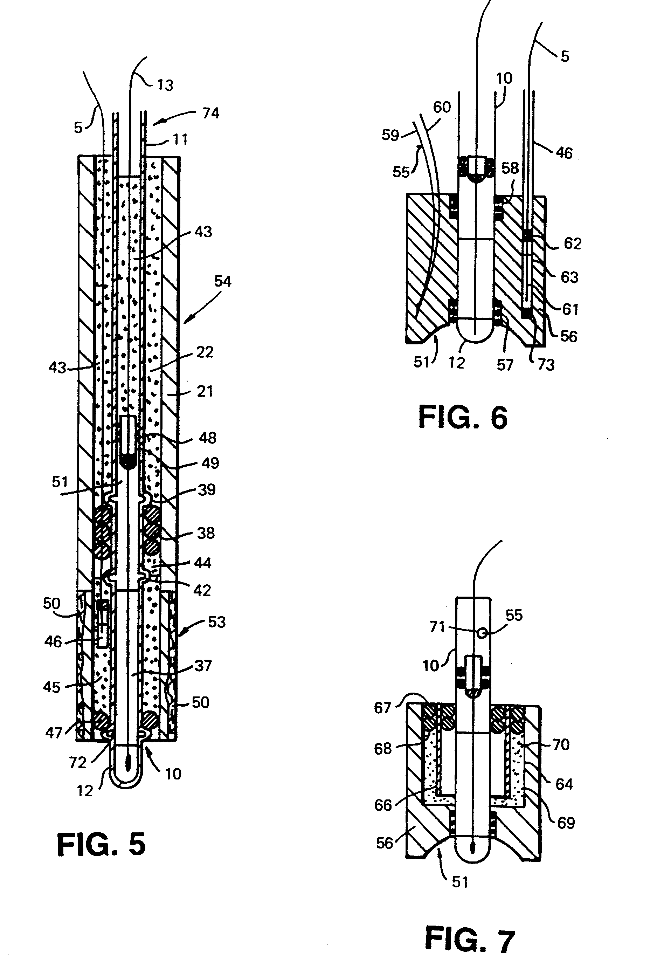

EP-A-0 247 535 A1 Russell et. al. describes "wet" and "dry" forms of reference electrode. In the "wet" form, a glass tube housing a silver wire and electrolyte and sealed with a porous plug is covered by a sheathing made of a polymer which is mixed with crystalline potassium chloride or another electroconductive additive before curing or polymerisation. In the "dry" form as described with reference to Figure 4 or 6, a chloridised silver wire has a sheathing made of a polymer mixed with a conductive additive, while as defined in Claim 5 the sheathing is made of a polymer which is mixed before curing or polymerisation with crystalline potassium chloride or another electroconductive additive, to which finely dispersed silver chloride is added. Other electroconductive additives mentioned include lithium chloride, potassium nitrate, or sodium nitrate. The polymers identified for the sheathing are polyvinyl ester, polyethylene, polypropylene, polyvinyl chloride, or epoxy resin.

EP-A-0 100 988 A1 Shimomura et. al. describes a reference electrode prepared by coating the surface of a conductive substrate with a silver complex polymer compound which is either a compound prepared by complex formation between a polymer compound containing a co-ordinating nitrogen atom and a silver ion, or such a complex compound containing a silver halide.

US-A-4913793 Leonard describes a reference electrode, optionally in combination with a measuring electrode in which the salt bridge comprises anionic and cationic ion exchange polymer.

US-A-4,112,352 describes a combined reference and measuring electrode fitted with a thermocompensator. However, wooden plugs must be used in order to ensure electrical communication between the reference electrode and sample solution. However, the wooden plug comprises a liquid junction which can result in contamination of the sample and failure of the electrode through leakage.

SUMMARY OF THE INVENTION

It is an object of the present invention to provide novel forms of reference electrode in which a polymer with an electrically conductive additive is used to isolate a reference electrode electrolyte from the sample solution while allowing electrical contact between the two.

The present invention provides a reference electrode for use with a measuring electrode for measuring ion activity in a sample solution, said reference electrode comprising:

an electrode chamber for holding electrolyte in complete isolation from the sample solution,

an electrode element in said electrode chamber,

and a tubular wall providing a physical barrier between the electrolyte and the sample solution but permitting electrical communication between them, the material of the wall comprising an immobilized non-porous polymer having one or more salts of potassium, sodium and/or lithium mixed through at least one region of said wall material before curing of the polymer to render said region of the wall material electrically conductive,

characterized in that the tubular wall has an increased concentration of the one or more salts on the outer surface of the tube or in the lower region of the tube.

A higher concentration of salts on the outer surface of the tube facilitates electrical contact with the sample solution and improves the performance of the electrode.

At least a portion of one of the walls which define the electrode chamber is formed of the electrically conductive wall material. The salt(s) in the wall material form part of the salt bridge of the reference electrode. No glass tube is required to hold the electrolyte, although one may be present. It is not necessary for the wall material to contain dispersed silver chloride.

Although the present invention is not limited by any theory, it is believed that the salt(s) render the wall material electrochemically-ionically conductive. The amount of the salt(s) must be an amount effective to render the wall material electrically conductive, more particularly electrochemically-ionically conductive, in the region through which electrical communication is required.

According to one feature of the invention, the wall material is in the form of a tube closed at the lower end, i.e. the end which is placed in the sample solution.

The electrode element may be of metal wire, gauze mesh or leaf, especially of silver, more particularly chloridised silver wire or may be a metal structure which optionally may define at least part of one of the walls of the chamber, e.g. a metal cylinder, especially of silver or coated therewith, more particularly chloridised silver.

One embodiment combines a reference electrode of the present invention with a measuring electrode to form a single-unit electrode assembly. This electrode assembly may comprise a conventional measuring electrode fitted inside a tube of the conductive wall material so as to define an annular chamber between them to hold electrolyte, with the measuring electrode as the inner wall and the tube of conductive material as the outer wall, and an electrode element housed in said chamber.

The electroconductive wall material preferably comprises a polymeric support containing dispersed salts selected from chloride, nitrate and sulphate salts of potassium, sodium and/or lithium. A major proportion of a potassium salt with a minor proportion of a lithium salt is preferred (e.g. in a ratio from 8.5:1 to 9.5:1), the presence of lithium being advantageous to reduce the resistance and thus to reduce response time for the electrode. The polymers useful in the wall material of the present invention should themselves have good electrical insulation properties, e.g. vinyl ester resins, polyesters, polyethylene, polypropylene, polyvinyl chloride or epoxy resins. The vinyl ester resins are preferred because of their chemical resistance. The polymers are cured under conventional conditions for the respective polymers to form a solid, immobilised non-porous body containing the salt(s) dispersed therethrough. Typical curing conditions are from 10 to 60 minutes at a temperature of between 40 and 10°C. Epoxy resins curable by ultra violet light may also be suitable.

Some washing out or-leaching of the salts from the exposed surface of the electroconductive wall material into the sample solution may occur during use. However, if the concentration of salt within the wall is high, this loss does not significantly affect the performance of the electrode. Leaching of the salts is a surface phenomenon and no penetration of the sample solution into the reference electrolyte is observed. Since some wash out is observed, the salt(s) in the wall material must be chosen carefully. It must not react with any species in the sample solution (which may form insoluble salts) and it must not interfere with the signal from the measuring electrode.

Typically the wall material comprises from 35-55% by weight of salt(s) dispersed in from 57-37% by weight of polymer resin so that the salt(s) is/are densely dispersed throughout the material (the percentages being based on the total weight of the composition). The preferred resin/KCl ratio is about 48/44 by weight as this produces a good curing mix and a high KCl concentration. Additives such as initiators and accelerators used in promoting the curing process may be present in small amounts. In cases where the wall material acts as a protective cover surrounding a silver halide containing cell (e.g. an Ag/AgCl electrode) it is advantageous that the protective cover be opaque so as to prevent photodegradation. To achieve this, graphite or other colourants may be dispersed in suitable amounts in the composition.

The electrode of the present invention overcomes the problems of conventional reference electrodes by isolating the electrolyte from the sample solution. It is also advantageous over other electrodes in that it is simple to construct. The wall material in tubular form may be manufactured by moulding or spinning techniques, preferably by spinning during curing, more particularly by spinning about a horizontal axis. Alternatively the wall material may be moulded and then left standing vertically during curing, so that the salt concentration tends to increase in the lower region. If the salt is of relatively high molecular weight (e.g. $KNO_3$), a high proportion of the salt may settle in the lower region until that lower region is saturated (or loaded to full capacity) with the salt. In such a case, the weight percentage of salt(s) in the total polymer resin may be less than the percentage ranges indicated above, e.g. 15 - 35%.

DESCRIPTION OF THE PREFERRED EMBODIMENTS

The following example illustrates how the electroconductive wall material may be produced:

Example 1

Potassium chloride is dried for 1 hour at 150°C and then placed in a mill and ground to a fine powder. Lithium chloride is treated in a similar manner. The powdered salts (potassium chloride 90 g, lithium chloride 10 g) are added along with optionally 2 g of Black Graphite powder to a vinyl ester resin (100 g) and mixed thoroughly at 25°C. A filler such as quartz may also be added for mechanical strength, typically in the amount of 5 gm although this can be varied.

Prior to curing the following are added to the mixture (percentages are by weight of total composition):

    1.5 - 2.0 % Methyl ethyl ketone peroxide (initiator)
    0.2 - 3.0 % Cobalt octoate (accelerator)
    0.5 - 2.0 % Dimethylaniline (accelerator)
    1.0 - 2.0 % BYK-A515 (air release agent)

* BYK is a registered trademark of BYK-Chemie GmbH.

One particular example of the total composition is as follows (percentages by weight):

| | |
|---|---|
| Vinyl ester resin | 48 |
| KCl | 44 |
| LiCl | 5 |
| Graphite | 1 |
| Methyl ethyl ketone peroxide | 1 |
| Cobalt Octoate | 0.5 |
| Dimethylaniline | 0.5 |
| BYK A-515 | 0.5 |

The mixture is then cast in a cylindrical glass form and heated to 40°C for 10 minutes. Alternatively, the mixture can be allowed to cure at a warm ambient temperature overnight. The glass form is allowed to stand vertically during curing. A tube closed at the bottom may be formed in this way. Alternatively, a cylindrical block having a concave base or recess can be formed using a suitable mould made up of a cylindrical form with a removable neoprene bung in its base. To release the hardened mixture from the form, the form is placed in an autoclave and heated to about 120°C for 10 minutes. This causes the cured part to shrink allowing it to be removed from the form. The tube of the cured immobilised composition is rigid and self-supporting. It is not porous to electrolytic solutions. If desired, the internal and/or external surface of the tube may be abraded lightly to remove a surface film of polymer and expose the salt content.

Example 2

In an alternative embodiment of a reference electrode, particularly for analysing a solution containing nitrate ions (such as an aqueous mixture of silver nitrate and a halide salt), one particular example of the total composition for the wall material is as follows (percentages by weight):

| | |
|---|---|
| Vinyl ester resin | 100 |
| $KNO_3$ | 20 |
| Methyl ethyl ketone peroxide | 2 |
| Cobalt Octoate | 2 |
| BYK A-515 | 1 |

The mixture is then cast in a cylindrical glass mould and heated to 40°C for 10 minutes. The glass mould is allowed to stand vertically during curing, so that the $KNO_3$ settles to the lower region of the mixture. A tube closed at the bottom may be formed in this way, with a high concentration of $KNO_3$ in or adjacent to the bottom of the tube.

Example 3

In an alternative embodiment, the composition of Example 1 can be prepared with the addition of glass fibre in the amount of approximately 0.35 gm. Preferably, glass fibre having a 6 mm length is used. The glass fibre is inactive electrically but provides reinforcement. The mixture is then cast in a cylindrical glass mould and several moulds are inserted in pods which are spun horizontally at between 1000-2000 rpm, preferably 1000 rpm, for 30 minutes and at a temperature of up to 80°C. Once cooled the wall material can be removed from the moulds.

In an alternative embodiment, a tube of wall material can be formed having active and inactive regions i.e. the wall can be made up of an electroconductive region of active material containing salt(s) in accordance with the invention and an electrically nonconductive region of inactive material. Electrically nonconductive wall material is made up of a composition as described in Example 1 but with the omission of the K and Li salts. A horizontal spinning process described above may be used. However, in this process, the glass mould is first smeared on its internal surface with inactive material in order to ensure an even bonding between the active and inactive components. Typically, 0.75 gm of active material is used and 5.5 gm of inactive material. The 0.75 gm batch of active material is injected into the mould at one end and a 5.5 gm batch of the inactive material is injected into the mould at the other end so that the two batches of material meet inside the mould. The mould is inserted into the horizontal spinning pod as previously described and the spinning process repeated such that a tubular wall is obtained having active and inactive regions.

The electroconductive wall material prepared in the Examples as described above is intended for use following sterilization in the embodiments of the invention as described below.

BRIEF DESCRIPTION OF THE DRAWINGS

Several embodiments of the invention are illustrated in the accompanying drawings, in which:

Figure 1 is a diagrammatic longitudinal cross section of one embodiment of a reference electrode;

Figure 2 is a diagrammatic longitudinal cross section of a second embodiment;

Figure 3 is a diagrammatic longitudinal cross section of an embodiment of a combined reference electrode/measuring electrode assembly;

Figure 4 is a diagram of a two-rod electrode assembly for pH measurements using the reference electrode of Figure 1;

Figure 5 is a diagrammatic longitudinal cross-section of an alternative embodiment of a combined reference electrode/measuring electrode assembly;

Figure 6 is a diagrammatic longitudinal cross-section of a combined reference electrode/measuring electrode assembly also combined with a thermocompensator;

Figure 7 is a diagrammatic longitudinal partial cross-section of an alternative embodiment of a combined reference electrode/measuring electrode assembly also combined with a thermocompensator;

Figure 8 is a diagrammatic longitudinal partial cross-section of the electrode assembly of Figure 6 in a casing with the measuring electrode recessed;

Figure 9 is a diagrammatic longitudinal partial cross-section of an alternative embodiment of a combined reference electrode/measuring electrode assembly combined with a thermocompensator in a casing with the measuring electrode protruding;

Figure 10 is a diagrammatic longitudinal partial cross-section of yet an alternative embodiment of a combined reference electrode/measuring electrode assembly combined with a thermocompensator in a casing with the measuring electrode positioned in a notch;

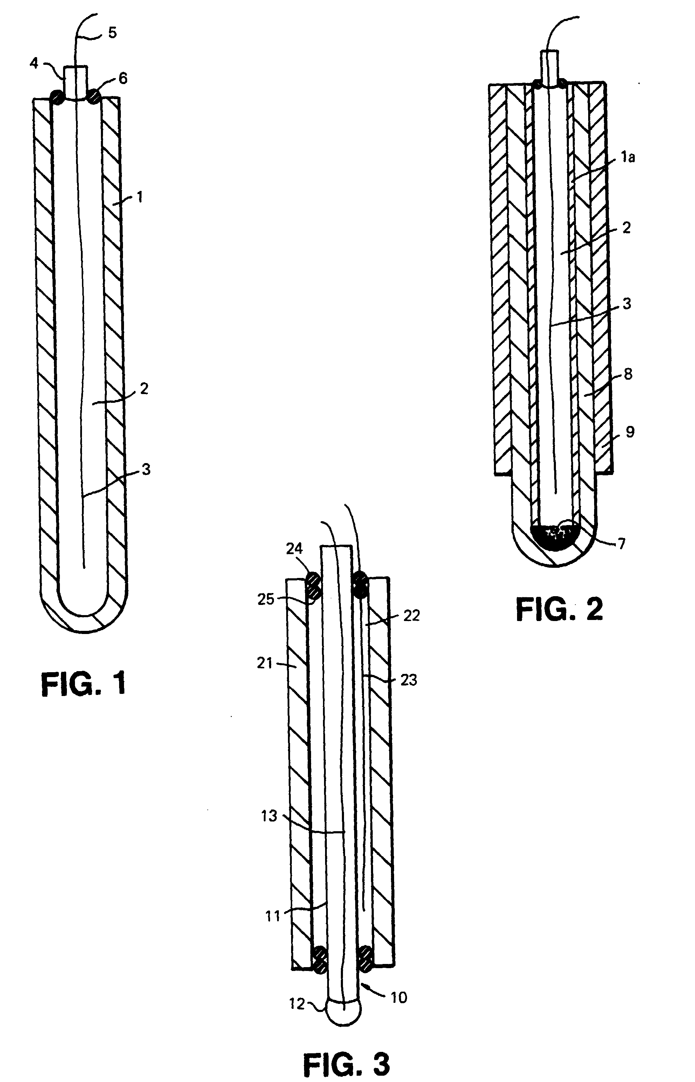

As shown in Figures 1 and 4, a reference electrode comprises a tube 1 of the electroconductive wall material (as described above) closed at one end and defining a salt bridge chamber 2 for holding electrolyte and an electrode element 3 housed in the chamber 2 and immersed in the electrolyte. The electrode element is suitably a galvanically chloridised silver wire, while the electrolyte is suitably a KCl solution (e.g. at about 2.7 M), or a gel of hydroxyethyl-cellulose mixed with KCl. Because silver chloride is highly soluble in a concentrated solution of potassium chloride, the electrolyte solution should be saturated with silver chloride to avoid removal of silver chloride from the electrode wire. At the top of the tube 1, the electrode wire is joined to a platinum plug which seals a small glass tube 4. 0-ring seals 6 are provided around the glass tube 4 to seal the electrolyte in the chamber 2. A further length of silver wire 5 connects the electrode to a coaxial cable which leads to a measuring instrument 40. When the tube 1 is placed in a samples solution 41 (as shown in Figure 4), the electrolyte in the chamber 2 is completely isolated from the sample solution but is in electrical communication therewith because of the salt in the wall material of the tube 1. No glass tube or porous plug as described in EP 0 247 535 is present.

This reference electrode may be used in a two-rod electrode assembly with a measuring electrode 10 for pH measurements as shown in Figure 4.

As shown in Figure 2, a second embodiment is similar to that of Figure 1 but it utilises a tube 1a of glass which is open at both ; ends. A plug 7 of cotton wool wadding is provided at the lower end of the tube 1a. The tube 1a defines most of the chamber 2 containing electrolyte and housing the electrode wire 3 as in the embodiment of Figure 1. The tube 1a is covered in a sheath 8 of the electroconductive wall material which, in particular, extends around the lower end of the tube 1a to provide a wall which seals the lower end of the tube and isolates electrolyte in the chamber 2 from a sample solution into which the reference electrode is immersed. The sheath 8 has been left standing vertically during curing so that the salt has fallen to the lower part of the sheath, surrounding the outlet of the tube 1a, which is the only region of the sheath where a high concentration of salt is required. The upper part of the sheath 8 is itself encased in a sleeve 9 of inert plastics material (e.g. epoxy resin) or glass which is not electrically conductive. This eliminates a possible error arising from the extent of immersion of the reference electrode in the sample solution.

The embodiment of Figure 3 is a combined (or single rod) assembly which has a measuring electrode 10 extending axially through the middle. The measuring electrode comprises a tube 11 of non-ion responsive glass of high resistance and a bulb 12 of pH or pX responsive glass which closes the lower end of the tube 11. A conventional Ag/AgCl electrode wire 13 is housed inside the tube 11 and bulb 12, immersed in a conventional pH buffer filling solution 37. Radially outwardly of the measuring electrode there is an annular chamber 22 which houses the reference electrode wire 23 (e.g. an Ag/AgCl electrode) immersed in the electrolyte e.g. a KCl electrolyte as described with respect to Figure 1, saturated with AgCl. The inner perimeter of the chamber 22 is defined by the tube 11 of the measuring electrode, while the outer perimeter of the chamber 22 is defined by a tube 21 of the electroconductive wall material. Double 0-ring seals 24, 25 are provided at the top and bottom of the chamber, sealing against the tubes 11 and 21 respectively. Electrode wires 13 and 23 are connected from the top of the assembly through a millivolt measuring instrument.

When the electrode assembly of Figure 3 is immersed in a sample solution, the electrolyte in chamber 22 is completely isolated from the sample solution by the tube 21 and the 0-ring seals 25, but is in electrical communication therewith because of the salt in the wall material of the tube 21.

Figure 5 shows an alternative embodiment of a combined (or single rod) assembly which has the measuring electrode 10 again extending longitudinally through the middle. The measuring electrode 10 is broadly similar to the one previously described in that it is made up of a tube 11 of non-ion responsive glass and a bulb 12 of pH or pX responsive glass. A conventional Ag/AgCl electrode wire 13 is housed inside the tube 11 and bulb 12 and immersed in a pH buffer solution 37. The measuring electrode 10 is surrounded by a tube 21 of wall material having active (conductive) and inactive (non-conductive) regions 53, 54 respectively and produced as described above using a horizontal spinning process. The measuring electrode 10 is spaced from the tube 21 to provide an annular chamber 22 between the measuring electrode 10 and the tube 21. Therefore, the inner perimeter of the chamber is defined by the tube 11 of the measuring electrode while the outer perimeter is defined by the tube 21 of wall material.

A triple 0-ring seal 38 is provided between the measuring electrode tube 11 and the tube 21. The triple 0-ring seal 38 is located between upper and lower radial protrusions 39, 42 respectively in the tube 11. The protrusions 39, 42 prevent slippage of the triple 0-ring seal 38. The annular chamber 22 in the region above the 0-ring seal 38 contains a full silicone potting material 43. The silicone potting material 43 is a sealant which is resistant to heat shock. The potting material 43 together with the triple 0-ring seal 38 expands and contracts as the temperature of the material increases and decreases and is resistant to heat shock.

Radially outwardly of the tube 11 and between the protrusion 42 and the triple 0-ring seal 38 there is an annular air chamber 44. The annular chamber 22 is filled with gelled electrolyte 45 below the air chamber 44. The annular air chamber 44 provides an air space for the expansion of the silicone potting material 43, the electrolyte 45 and the triple 0-ring seal 38 when the electrode is exposed to high temperatures.

An Ag/AgCl reference cell 46 is immersed in the gelled electrolyte 45. A contact wire 5 extends upwards from the reference cell 46 through the triple 0-ring seal 38 and the silicone potting 43 and from the annular chamber 22 to connect the electrode to a coaxial cable which leads to a measuring instrument when in use.

The electrolyte 45 is sealed within the chamber 22 by a lower 0-ring seal 47 between the tube 11 (at the base of the non-ion responsive glass region) and the tube 21. The 0-ring seal 47 is maintained in position by a protrusion 72 on the measuring electrode located above the pH/pX responsive bulb 12.

Internally, the measuring electrode 10 has a similar air-space and potting material arrangement to that of the chamber 22. Approximately halfway along its length the glass electrode contact wire 13 is surrounded by an internal glass tube 49 which forms a fully annealed Pt/glass seal about the contact wire 13.

A second triple 0-ring seal 48, similar to the one previously described, is provided between the internal glass tube 49 and the tube 11. The tube is filled with full silicone internal potting material 43 above the 0-ring 48 as previously described while the tube 11 also has an internal air chamber 51 below the second triple 0-ring seal 48. Below the air chamber 51, the tube 11 is filled with the pH buffer solution 37 as previously described.

The tube 21 is made up of conductive region 53 at its lower end adjacent the Ag/AgCl cell 46 and a non-conductive region 54 which makes up the remainder of the tube 21. The tube 21 is manufactured as described in Example 3.

In the conductive region 53 the salts contained within this region are concentrated on the outer surface of the tube 21 due to the horizontal spinning process as indicated by the reference numeral 50. As indicated above, a higher concentration of salts on the outer surface of the tube 21 facilitates electrical contact with the solution and improves the performance of the electrode. Furthermore, conductive regions of the tube 21 are more hygroscopic than those of nonconductive regions. Hygroscopic regions adjacent electrical contacts can result in errors. The electrode of the invention is connected to a measuring instrument (not shown) at electric contact regions indicated by the reference numeral 74. Therefore, the use of the nonconductive region 54 adjacent the electric contact regions 74 of the electrode reduces signal and reading errors.

Figure 6 shows a diagrammatic longitudinal cross-section through a combined reference electrode-measuring electrode assembly which is also combined with a thermocompensator 55. The electrode is made up of a cylindrical plug or block 56 of conductive wall material manufactured as described above. The electrode has a standard measuring electrode 10 similar to the ones previously described extending longitudinally through the center of the block 56. The pH/pX responsive bulb 12 of the measuring electrode 10 protrudes from the base of the block 56 into a recess 51 defined in the base of the block 56. The measuring electrode 10 is maintained in a fluid tight relationship with the block 56 by a lower triple 0-ring seal 57 surrounding the measuring electrode 10 adjacent the recess 51 and an upper triple 0-ring seal 58 surrounding the measuring electrode 10 at the upper surface of the block 56.

The thermocompensator 55 is inserted into the conductive block 56. The thermocompensator 55 is a standard thermocompensator made up of a first pole 59 and a second pole 60 which are connected to a measuring instrument. An Ag/AgCl reference cell 46 is also inserted in the block 56. The reference cell 46 is similar to the ones previously described in that it contains a Pt/glass seal 62 and a contact wire 5 and an electrode element 61 is inserted into a KCl gelled electrolyte 63. At its base, the Ag/AgCl reference element is provided with cotton wool wadding 73 through which the reference element 61 makes conductive contact with the block 56 and thus with the solution in which the electrode is inserted.

The conductive block 56 functions as a salt bridge so that the use of wood and teflon junctions is avoided and a hardwearing resilient combined thermocompensator, measuring and reference electrode is produced.

Figure 7 shows a diagrammatic longitudinal cross-section of an alternative embodiment of a combined reference electrode-measuring electrode assembly also combined with a thermocompensator 55. As shown in the drawing, the combined reference electrode-measuring electrode assembly is also made up of a block 56 of conductive polymeric wall material which is statically moulded into the desired shape as described above. The block 56 also has a recessed base 51 and defines an open topped internal cylindrical chamber 64. A measuring electrode 10 extends longitudinally through the chamber 64 and into the recess 51 as previously described. A chloridised silver cylinder 66 is mounted in the chamber 64 and surrounds the measuring electrode 10. The silver cylinder 66 is spaced apart from the conductive block 56 by a double 0-ring seal 67, 68 respectively to provide an annular chamber 69 between the silver cylinder 66 and the conductive block 56. The annular chamber 69 is filled with a gelled silver saturated KCl electrolyte 70. The silver cylinder 66 together with the gelled electrolyte 69 function as an Ag/AgCl reference cell which makes contact with a sample solution through the conductive block 56.

The thermocompensator 55 can be inserted through an opening 71 provided therefor in the measuring electrode 10.

An advantage of the present embodiment of a combination electrode together with thermocompensator is that the electrode can be easily assembled and a more efficient seal can be provided through the use of the double 0-ring seal 67, 68 and the silver cylinder 66. The use of the silver cylinder 66 also provides a more stable reference signal for the reference cell while the non-permeable conductive block 56 prevents sample solution contamination.

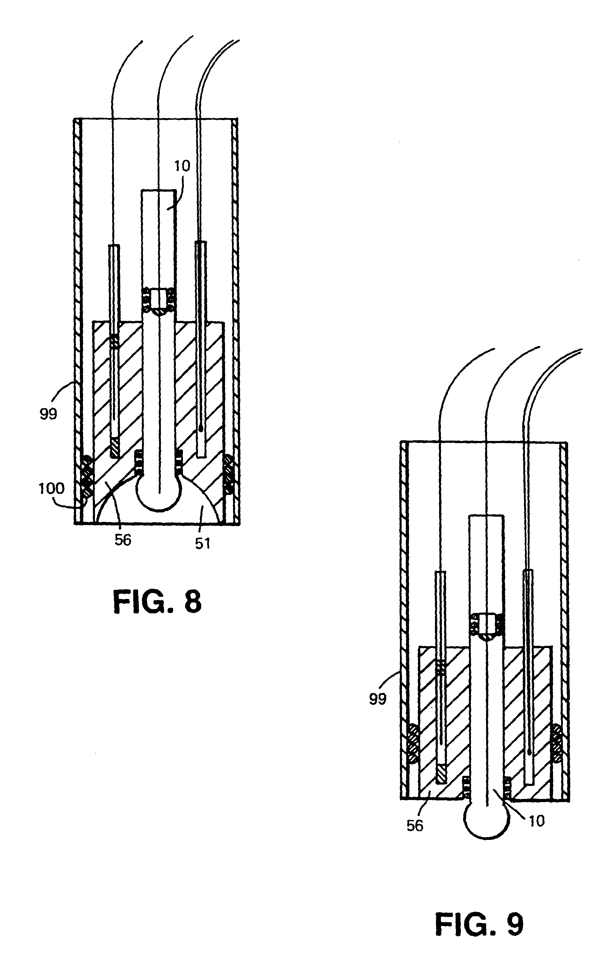

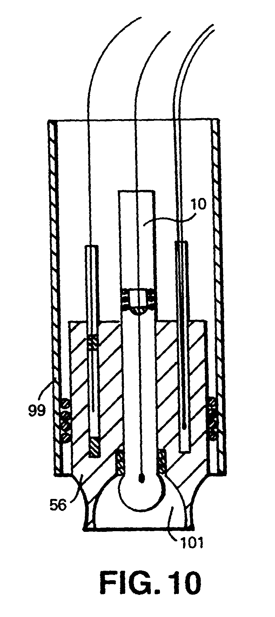

Figure 8 shows a diagrammatic longitudinal partial cross-section of the electrode assembly of Figure 6 in a casing of inert plastics material or glass which is not electrically conductive, with the measuring electrode 10 in a recessed position while Figures 10 and 11 show diagrammatic longitudinal partial cross-sections of the combined reference electrode-measuring electrode assembly with the measuring electrode 10 in protruding and notched positions respectively. As shown in Figure 8, the block of conductive material 56 has a recess 51 in its base and is housed in a casing 99. The conductive block 56 is maintained in a fluid tight relationship with the casing 99 by means of a quadruple 0-ring seal 100. The measuring electrode 10 protrudes into the recess 51 defined by the block 56. In this embodiment, the measuring electrode is protected by the casing 99 and the conductive block 56 so that the assembly is particularly suitable for the analysis of high-velocity and/or high-density solids.

In Figure 9, the measuring electrode 10 protrudes from the conductive block 56. In this embodiment, the conductive block 56 is also housed within a casing 99 as described above. However, the conductive block 56 is not recessed but is flush with the end of the casing 99. The flush arrangement is particularly suitable where fouling of the measuring electrode 10 is expected as the conductive material provides extra protection for the electrode.

Figure 10 shows the measuring electrode 10 located within a notch 101 defined by the conductive block 56. The conductive block 56 is once again housed in the casing 99. However, in the present embodiment the conductive block 56 protrudes from the casing 99 in the form of a notched form with the measuring electrode 10 recessed in the notch 101. Therefore, the conductive polymeric material extends beyond the liquid junction surface of the measuring electrode 10 to provide protection for the electrode. This arrangement is particularly suitable for submersible sensors.

**Claims**

1. A reference electrode for use with a measuring electrode for measuring ion activity in a sample solution, said reference electrode comprising:

an electrode chamber (2, 22, 63, 69) for holding electrolyte in complete isolation from the sample solution,

an electrode element (3, 23, 61, 66) in said electrode chamber,

and a tubular wall (1, 8, 21, 53, 56) providing a physical barrier between the electrolyte and the sample solution but permitting electrical communication between them, the material of the wall comprising an immobilised non-porous polymer having one or more salts of potassium, sodium and/or lithium mixed through at least one region of said wall material before curing of the polymer to render said region of the wall material electrically conductive,

characterized in that the tubular wall (1, 8, 21, 53, 56) has an increased concentration of the one or more salts on the outer surface of the tube or in the lower region of the tube.

2. An electrode according to claim 1 wherein the tubular wall (1, 8, 56) has been created by moulding.

3. An electrode according to claim 1 wherein the tubular wall (1, 8, 21) has been manufactured by spinning.

4. An electrode according to claim 3 wherein the tubular wall (21) has been created by horizontal spinning during curing.

5. An electrode according to claim 4 wherein the tubular wall (21) has electrically conductive (53) and electrically non-conductive (54) regions.

6. An electrode according to any of the preceding claims wherein the tubular wall (1, 8) is in the form of a tube closed at the lower end.

7. An electrode according to claim 1 combined with a measuring electrode (10) to form a single-unit electrode assembly wherein the measuring electrode (10) is fitted inside a tube (21, 53) of the electroconductive material so as to define an annular chamber (22) between them to hold electrolyte, with the measuring electrode (10) as the radially-inner wall and the tube (21, 53) of electroconductive material as the radially outer wall of the chamber, and a reference electrode element (23) housed in said chamber.

8. An electrode according to claim 1 combined with a measuring electrode to form a single unit electrode assembly wherein the measuring electrode (10) and the reference electrode (46) are mounted in a tubular block of the immobilized non-porous electroconductive polymer material.

9. An electrode assembly as claimed in claim 1 further comprising a thermocompensator (55).

10. An electrode assembly as claimed in claim 1 wherein the reference element (66) comprises an open-ended chloridised silver cylinder which forms at least a portion of one of the walls which define the electrode chamber (69).

11. An electrode according to any of the preceding claims wherein the electroconductive material comprises a polymeric support containing dispersed salts selected from chloride, nitrate and sulphate salts of potassium, sodium and/or lithium.

12. An electrode according to any of the preceding claims wherein the electrically-conductive wall material comprises from 35-55% by weight of the salt (s) dispersed in from 57-37% by weight of the polymer (the percentages being based on the total weight of the composition).

13. An electrode according to any of the preceding claims wherein the polymer is a vinyl ester resin.

14. An electrode according to claim 13 wherein the salt is potassium chloride and the weight ratio of vinyl ether/potassium chloride is about 48/44.

15. An electrode according to claim 1 wherein graphite or other colourants are dispersed in suitable amounts in the wall material to render the material opaque.

16. An electrode according to claim 1 wherein quartz is dispersed in a suitable amount in the wall material to reinforce the material.

17. A reference electrode for use with a measuring electrode for measuring ion activity in a sample solution, said reference electrode comprising:

an electrode chamber (2, 22) for holding electrolyte in complete isolation from the sample solution,

an electrode element (3) in said electrode chamber,

and a tubular wall (1, 8, 21) providing a physical barrier between the electrolyte and the sample solution but permitting electrical communication between them, the material of the wall comprising an immobilised non-porous polymer having one or more salts of potassium, sodium and/or lithium mixed through at least one region of said wall material before curing of the polymer to render said region of the wall material electrically conductive,

characterized in that the tubular wall (1, 8, 21) has been manufactured by spinning.

18. An electrode according to claim 16 wherein the tubular wall has been created by horizontal spinning during curing.

19. A method of making a tube of pdlymeric material suitable for use as at least part of a salt bridge of a reference electrode which method comprises mixing one or more salts of potassium, sodium and/or lithium in powder form with an uncured polymer so as to disperse the salt(s) through the polymer, placing the mixture in a mould having a longitudinal axis, positioning the mould in an orientation such that the longitudinal axis of the mould is substantially vertical, allowing at least some of the salt(s) to settle in the mixture so that the salt concentration in the lower region thereof is increased relative to the upper region thereof, and curing the polymer to an immobilised non-porous tubular body.

20. A method of making a tube of polymeric material suitable for use as at least part of a salt bridge of a reference electrode which method comprises mixing one or more salts of potassium, sodium and/or lithium in powder form with an uncured polymer so as to disperse the salt(s) through the polymer to form active wall material, placing the active wall material in a mould having a longitudinal axis, positioning the mould with its axis-substantially horizontal, and spinning the mould about the longitudinal axis while curing the polymer to an immobilized non-porous tubular body.

21. A method according to claim 20 comprising placing the active wall material in one region of the mould and placing inactive material comprising uncured polymer without the added salt(s) in another region of the mould and spinning the mould about the horizontal longitudinal axis while curing the polymer to an immobilized non-porous body having an electrically-conductive region and an electrically non-conductive region.

**Patentansprüche**

1. Referenzelektrode zur Verwendung mit einer Meßelektrode zum Messen von Ionenaktivität in einer Probelösung, wobei die Referenzelektrode folgendes aufweist:

eine Elektrodenkammer (2, 22, 63, 69), um den Elektrolyt von der Probelösung vollständig isoliert zu halten;
ein Elektrodenelement (3, 23, 61, 66) in der Elektrodenkammer;
und eine röhrenförmige Wand (1, 8, 21, 53, 56), die eine physische Barriere zwischen dem Elektrolyt und der Probelösung schafft, jedoch die elektrische Verbindung zwischen ihnen gestattet, wobei das Wandmaterial ein verfestigtes, nicht poröses Polymer umfaßt, das ein oder mehrere Kalium-, Natrium- und/oder Lithiumsalze aufweist, die zumindest in einen Bereich des Wandmaterials gemischt sind, um diesen Bereich des Wandmaterials elektrisch leitend zu machen,

dadurch gekennzeichnet, daß die röhrenförmige Wand (1, 8, 21, 53, 56) auf der äußeren Oberfläche der Röhre oder im unteren Bereich der Röhre eine erhöhte Konzentration des einen Salzes bzw. der mehreren Salze aufweist.

2. Elektrode nach Anspruch 1, bei der die röhrenförmige Wand (1, 8, 56) durch Gießen hergestellt worden ist.

3. Elektrode nach Anspruch 1, bei der die röhrenförmige Wand (1, 8, 21) durch Rotation gefertigt worden ist.

4. Elektrode nach Anspruch 3, bei der die röhrenförmige Wand (21) durch horizontale Rotation während des Aushärtens hergestellt worden ist.

5. Elektrode nach Anspruch 4, bei der die röhrenförmige Wand (21) elektrisch leitende (53) und elektrisch nicht leitende (54) Bereiche aufweist.

6. Elektrode nach einem der vorhergehenden Ansprüche, bei der die röhrenförmige Wand (1, 8) die Form einer Röhre aufweist, die am unteren geschlossen ist.

7. Elektrode nach Anspruch 1, die mit einer Meßelektrode (10) kombiniert ist, um eine aus einer einzigen Einheit bestehende Elektrodenanordnung zu bilden, wobei die Meßelektrode (10) in eine Röhre (21, 53) des elektrisch leitenden Materials eingepaßt ist, um eine ringförmige Kammer (22) dazwischen zu definieren, um den Elektrolyten aufzunehmen, wobei die Meßelektrode (10) die radial innere Wand und die Röhre (21, 53) aus elektrisch leitendem Material die radial äußere Wand der Kammer bildet, und wobei ein Referenzelektrodenelement (23) in der Kammer untergebracht ist.

8. Elektrode nach Anspruch 1, die mit einer Meßelektrode kombiniert ist, um eine aus einer einzigen Einheit bestehende Elektrodenanordnung zu bilden, wobei die Meßelektrode (10) und die Referenzelektrode (46) in einem röhrenförmigen Block des verfestigten, nicht porösen elektrisch leitenden Polymermaterials angebracht ist.

9. Elektrodenanordnung nach Anspruch 1, die weiterhin einen Thermokompensator (55) umfaßt.

**10.** Elektrodenanordnung nach Anspruch 1, bei der das Referenzelement (66) einen chlorierten Silberzylinder mit offenen Enden umfaßt, der zumindest einen Teil einer der Wände bildet, die die Elektrodenkammer (69) definieren.

**11.** Elektrode nach einem der vorhergehenden Ansprüche, bei der das elektrisch leitende Material eine Polymerstütze umfaßt, die dispergierte, aus Chlorid-, Nitrat- und Sulphatsalzen ausgewählte Kalium-, Natrium- und/oder Lithiumsalze enthält.

**12.** Elektrode nach einem der vorhergehenden Ansprüche, bei der das elektrisch leitende Wandmaterial 35-55% Gewichtsanteile des Salzes (der Salze) umfaßt, das (die) in 57-37% Gewichtsanteilen des Polymers dispergiert ist (sind) (wobei die Prozentangaben auf dem Gesamtgewicht der Zusammensetzung basieren).

**13.** Elektrode nach einem der vorhergehenden Ansprüche, bei der das Polymer ein Vinylesterharz ist.

**14.** Elektrode nach Anspruch 13, bei der das Salz ein Kaliumchlorid ist und das Gewichtsverhältnis von Vinylester zu Kaliumchlorid ungefähr 48 zu 44 beträgt.

**15.** Elektrode nach Anspruch 1, bei der Graphit oder andere Farbstoffe in geeigneten Mengen im Wandmaterial dispergiert sind, um das Material opak zu machen.

**16.** Elektrode nach Anspruch 1, bei der Quarz in geeigneter Menge im Wandmaterial dispergiert ist, um das Material zu verstärken.

**17.** Referenzelektrode zur Verwendung mit einer Meßelektrode zum Messen von Ionenaktivität in einer Probelösung, wobei die Referenzelektrode folgendes aufweist:

eine Elektrodenkammer (2, 22), um den Elektrolyt von der Probelösung vollständig isoliert zu halten;
ein Elektrodenelement (3) in der Elektrodenkammer;
und eine röhrenförmige Wand (1, 8, 21), die eine physische Barriere zwischen dem Elektrolyt und der Probelösung schafft, jedoch die elektrische Verbindung zwischen ihnen gestattet, wobei das Wandmaterial ein verfestigtes, nicht poröses Polymer umfaßt, das ein oder mehrere Kalium-, Natrium- und/oder Lithiumsalze aufweist, die zumindest in einen Bereich des Wandmaterials gemischt werden, bevor das Polymer ausgehärtet wird, um diesen Bereich des Wandmaterials elektrisch leitend zu machen,

dadurch gekennzeichnet, daß die röhrenförmige Wand (1, 8, 21) durch Rotation hergestellt worden ist.

**18.** Elektrode nach Anspruch 16, bei der die röhrenförmige Wand durch horizontale Rotation während des Aushärtens hergestellt worden ist.

**19.** Verfahren zur Herstellung einer aus Polymermaterial bestehenden Röhre, die dazu geeignet ist, als zumindest ein Teil einer Salzbrücke einer Referenzelektrode verwendet zu werden, wobei das Verfahren folgendes umfaßt: Mischen eines oder mehrerer pulverförmiger Kalium-, Natrium- und/oder Lithiumsalze mit einem ungehärteten Polymer, um das Salz (die Salze) im Polymer zu dispergieren, Plazieren der Mischung in einer Form, die eine Längsachse aufweist, Positionieren der Form in eine solche Orientierung, daß die Längsachse der Form im wesentlichen vertikal ist, Zulassen, daß sich zumindest ein Teil des Salzes (der Salze) in der Mischung setzt, so daß die Salzkonzentration in deren unterem Bereich relativ zu deren oberem Bereich erhöht ist, und Aushärten des Polymers zu einem verfestigten, nicht porösen röhrenförmigen Körper.

**20.** Verfahren zur Herstellung einer aus Polymermaterial bestehenden Röhre, die dazu geeignet ist, als zumindest ein Teil einer Salzbrücke einer Referenzelektrode verwendet zu werden, wobei das Verfahren folgendes umfaßt: Mischen eines oder mehrerer pulverförmiger Kalium-, Natrium- und/oder Lithiumsalze mit einem ungehärteten Polymer, um das Salz (die Salze) im Polymer zu dispergieren, um ein aktives Wandmaterial auszubilden, Plazieren des aktiven Wandmaterials in einer Form, die eine Längsachse aufweist, Positionieren der Form, so daß ihre Achse im wesentlichen horizontal ist, und Rotieren der Form um die Längsachse, während das Polymer zu einem verfestigten, nicht porösen röhrenförmigen Körper ausgehärtet wird.

**21.** Verfahren nach Anspruch 20, das folgendes umfaßt: Plazieren des aktiven Wandmaterials in einem Bereich der Form und Plazieren des inaktiven Materials, das nicht ausgehärtetes Polymer ohne das zugesetzte Salz (die zugesetzten Salze) umfaßt, in einem anderen Bereich der Form, und Rotieren der Form um die horizontale Längsachse, während das Polymer zu einem verfestigten, nicht porösen Körper ausgehärtet wird, der einen elektrisch leitenden Bereich und einen elektrisch nicht leitenden Bereich aufweist.

## Revendications

1. Electrode de référence destinée à être utilisée avec une électrode de mesure pour mesurer l'activité ionique dans une solution servant d'échantillon, ladite électrode de référence comprenant :

   une chambre d'électrode (2, 22, 63, 69) destinée à renfermer un électrolyte à l'état totalement isolé de la solution d'échantillon,
   un élément servant d'électrode, (3, 23, 61, 66) dans ladite chambre d'électrode,
   et une paroi tubulaire (1, 8, 21, 53, 56) constituant une barrière physique entre l'électrolyte et la solution d'échantillon mais permettant une communication électrique entre cet électrolyte et cette solution, la matière de la paroi comprenant un polymère non poreux immobilisé ayant un ou plusieurs sels de potassium, sodium et/ ou lithium mélangés à travers au moins une région de ladite matière de paroi avant durcissement du polymère pour rendre ladite région de la matière de paroi électriquement conductrice,

   caractérisée en ce que la paroi tubulaire (1, 8, 21, 53, 56) présente une concentration accrue du ou des sels sur la surface extérieur du tube ou dans la région inférieure du tube.

2. Electrode suivant la revendication 1, dans laquelle la paroi tubulaire (1, 8, 56) a été formée par moulage.

3. Electrode suivant la revendication 1, dans laquelle la paroi tubulaire (1, 8, 21) a été produite par filage.

4. Electrode suivant la revendication 3, dans laquelle la paroi tubulaire (21) a été formée par filage horizontal au cours du durcissement.

5. Electrode suivant la revendication 4, dans laquelle la paroi tubulaire (21) comporte des régions électriquement conductrice (53) et électriquement non conductrice (54).

6. Electrode suivant l'une quelconque des revendications précédentes, dans laquelle la paroi tubulaire (1, 8) est sous forme d'un tube clos à l'extrémité inférieure.

7. Electrode suivant la revendication 1 associée à une électrode de mesure (10) pour former un assemblage d'électrodes en une seule unité, dans lequel l'électrode de mesure (10) est adaptée à l'intérieur d'un tube (21, 53) de la matière électroconductrice de manière à définir une chambre annulaire (22) entre cette électrode et ce tube pour renfermer l'électrolyte, avec l'électrode de mesure (10) comme paroi radialement intérieure et le tube (21, 53) de matière électroconductrice comme paroi radialement extérieure de la chambre, et un élément d'électrode de référence (23) logé dans ladite chambre.

8. Electrode suivant la revendication 1 associée à une électrode de mesure pour former un assemblage d'électrodes en une seule unité, dans lequel l'électrode de mesure (10) et l'électrode de référence (46) sont montées dans un bloc tubulaire de la matière polymérique électroconductrice non poreuse immobilisée.

9. Assemblage d'électrodes suivant la revendication 1, comprenant en outre un thermocompensateur (55).

10. Assemblage d'électrodes suivant la revendication 1, dans lequel l'élément de référence (66) comprend un cylindre d'argent chloruré à extrémités ouvertes qui forme au moins une partie d'une des parois définissant la chambre d'électrode (69).

11. Electrode suivant l'une quelconque des revendications précédentes, dans laquelle la matière électroconductrice comprend un support polymérique contenant des sels dispersés choisis entre des chlorures, nitrates et sulfates de potassium, sodium et/ou lithium.

12. Electrode suivant l'une quelconque des revendications précédentes, dans laquelle la matière de paroi électriquement conductrice comprend 35 à 55 % en poids du ou des sels dispersés dans 57 à 37 % en poids du polymère (les pourcentages étant basés sur le poids total de la composition).

13. Electrode suivant l'une quelconque des revendications précédentes, dans laquelle le polymère est une résine d'ester vinylique.

14. Electrode suivant la revendication 13, dans laquelle le sel consiste en chlorure de potassium et le rapport pondéral éther vinylique/chlorure de potassium est égal à environ 48/44.

15. Electrode suivant la revendication 1, dans laquelle du graphite ou d'autres matières colorantes sont dispersés en des quantités convenables dans la matière de paroi pour rendre cette matière opaque.

16. Electrode suivant la revendication 1, dans laquelle du quartz est dispersé en une quantité convenable dans la matière de paroi pour renforcer cette matière.

17. Electrode de référence destinée à être utilisée avec une électrode de mesure pour mesurer l'activité ionique dans une solution d'échantillon, ladite électrode de référence comprenant :

une chambre d'électrode (2, 22) destinée à renfermer un électrolyte à l'état totalement isolé de la solution d'échantillon,
un élément servant d'électrode (3) dans la chambre d'électrode,
et une paroi tubulaire (1, 8, 21) assurant une barrière physique entre l'électrolyte et la solution d'échantillon mais permettant une communication électrique entre cet électrolyte et cette solution, la matière de la paroi comprenant un polymère non poreux immobilisé ayant un ou plusieurs sels de potassium, sodium et/ou lithium mélangés à travers au moins une région de ladite matière de paroi avant durcissement du polymère pour rendre ladite région de la matière de paroi électriquement conductrice,

caractérisée en ce que la paroi tubulaire (1, 8, 21) a été produite par filage.

**18.** Electrode suivant la revendication 16, dans laquelle la paroi tubulaire a été formée par filage horizontal au cours du durcissement.

**19.** Procédé pour la préparation d'un tube de matière polymérique pouvant être utilisé convenablement en tant qu'au moins une partie d'un pont de sel d'une électrode de référence, procédé qui comprend les étapes'consistant à mélanger un ou plusieurs sels de potassium, sodium et/ou lithium sous forme de poudre à un polymère non durci de manière à disperser le ou les sels à travers le polymère, à placer le mélange dans un moule ayant un axe longitudinal, à positionner le moule suivant une orientation telle que l'axe longitudinal du moule soit essentiellement vertical, à laisser au moins une partie du ou des sels se déposer dans le mélange de telle sorte que la concentration en sels dans la région inférieure de ce mélange soit accrue par rapport à celle existant dans la région supérieure de ce mélange, et à durcir le polymère sous forme d'un corps tubulaire non poreux immobilisé.

**20.** Procédé pour la préparation d'un tube de matière polymérique pouvant être utilisé convenablement en tant qu'au moins une partie d'un pont de sel d'une électrode de référence, procédé qui comprend les étapes consistant à mélanger un ou plusieurs sels de potassium, sodium et/ou lithium sous forme de poudre avec un polymère non durci de manière à disperser le ou les sels à travers le polymère pour former une matière de paroi active, à placer la matière de paroi active dans un moule ayant un axe longitudinal, à positionner le moule avec son axe sensiblement horizontal, et à centrifuger le moule autour de l'axe longitudinal avec durcissement simultané du polymère sous forme d'un corps tubulaire non poreux immobilisé.

**21.** Procédé suivant la revendication 20, comprenant les étapes consistant à placer la matière de paroi active dans une région du moule et à placer une matière inactive comprenant le polymère non durci sans le ou les sels ajoutés dans une autre région du moule et à centrifuger le moule autour de l'axe longitudinal horizontal avec durcissement simultané du polymère sous forme d'un corps non poreux immobilisé comportant une région électriquement conductrice et une région électriquement non conductrice.

**FIG. 1**

**FIG. 2**

**FIG. 3**

**FIG. 4**

**FIG. 5**

**FIG. 6**

**FIG. 7**

EP 0 624 247 B1

FIG. 8

FIG. 9

16

**FIG. 10**